# EUROPEAN PATENT APPLICATION

(11) **EP 1 092 910 A2**
(43) Date of publication of application: **18.04.2001**
(21) Application number: 00203520.2
(22) Date of filing: 11.10.2000
(51) Int. Cl.: F16M 11/06

(54) **Support thrust ring and machine tool head containing a support thrust ring**

(30) Priority: 14.10.1999 IT MI992151
(71) Applicant: F.M. Elettromeccanica s.r.l., 20036 Meda (IT)
(72) Inventor: Marelli, Flavio, 20036 Meda (MI) (IT)
(74) Representative: Mittler, Enrico

(57) **Abstract**

The present invention refers to a support thrust ring comprising a braking element, suitable for joining a rotating pivot to a mechanical structure. In addition it describes the use of a thrust ring for joining a head to a machine tool. In one embodiment the invention consists of a support thrust ring, suitable for joining a pivot to a mechanical structure, comprising a fixed external ring and a mobile internal ring which is mobile in relation to said external ring, said external ring and said internal ring are coupled by means of at least one bearing characterized in that said thrust ring comprises a braking element suitable for blocking the movement between said external ring and said internal ring.

## Description

The present invention refers to a support thrust ring, suitable for joining a rotating pivot to a fixed mechanical structure.

In addition it describes the use of a thrust ring to join a head to a machine tool.

To join a pivot to be rotated to a fixed mechanical structure use is often made of a thrust ring composed of two coaxial rings between which one or more bearings are interposed. A thrust ring can be for example used to connect the spindle of a machine tool in a rotating manner to the machine itself, or to a spindle-holding head or finally to connect the spindle-holding head to the machine tool.

In machine tools, for greater rigidity and precision in milling operations, it is advantageous to have a blocking brake for the rotating axis pivot.

Given the working precision required to the machine tools and the stresses that the above mentioned elements are normally submitted to, they are complex, heavy and of considerable size.

In view of the state of the technique described, the object of the present invention is to remove the dimension and complexity drawbacks of the known art.

In accordance with the present invention, this object is reached by means of a support thrust ring, suitable for joining a pivot to a mechanical structure, comprising a fixed external ring and an internal ring which is movable with respect to said external ring, said external ring and said internal ring are coupled by means of at least one bearing, characterized in that said thrust ring comprises a braking element suitable for blocking the movement between said external ring and said internal ring.

Said object is also reached by means of a head suitable for being connected to a machine tool, comprising a connecting thrust ring between said head and said machine tool, characterized in that said thrust ring includes a hydraulically controlled brake.

Thanks to the present invention a rotatable coupling and a compact type braking element can be obtained, which are contained in a single mechanical block such as the thrust ring, capable of meeting the extensive working requirements of the machine tools and heads.

Using the external surface of the internal ring as friction surface considerable compacting of the braking element can be reached.

The characteristics and advantages of the present invention will be evident from the following detailed description of an embodiment thereof, illustrated as non-limiting example in the enclosed drawings, in which:
Figure 1 represents an embodiment of the thrust ring in accordance with the present invention,
Figure 2 represents an embodiment of the head of a machine tool in accordance with the present invention.

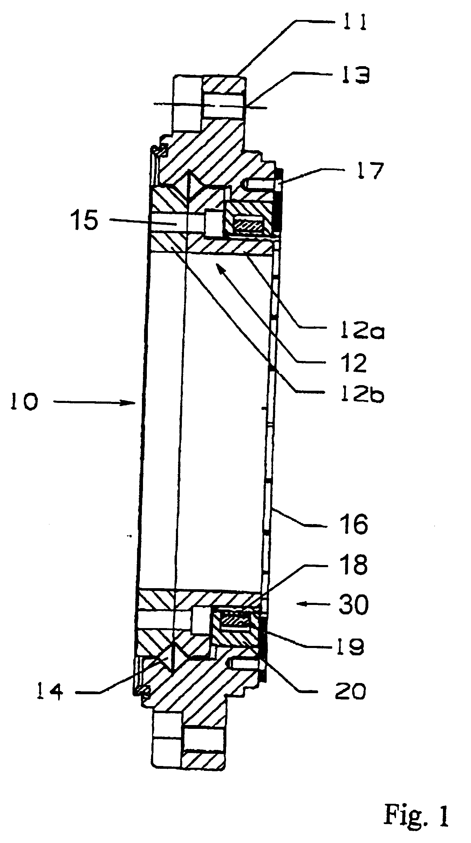

Now with reference to Figure 1, where a preferred embodiment of the thrust ring 10 in accordance with the present invention is represented, an external ring 11 and an internal ring 12 can be distinguished. The external ring 11 consists of a cylinder suitable for being fixed, through suitable means, for example on a machine tool (not represented), and in any case to any fixed mechanic element to which a pivot to be rotated has to be applied. Holes 13 for fastening to the machine tool are represented in Figure 1.

The internal ring 12 can rotate in relation to the external ring 11 by means of bearings 14 preferably of the crossed roller type. The internal ring 12 is preferably composed of two parts 12a and 12b, connected to each other by means of bolts 15. The bolts 15 can also be preferably used for the connection of the internal ring 12 to a pivot (not shown) suitable for being put into rotation by appropriate motors of the machine tool. The two parts 12a and 12b, suitably worked, constitute a part of the seat of the bearing 14. In addition, by sizing this part of the seat of the bearing 14 conveniently, they permit the right pre-load to be given to the bearing 14. The part of the seat of the bearing 14, placed on the external ring 11, is preferably constituted by a single cavity formed in the ring 11 itself.

A braking block 30 is placed on the external ring 11.

The braking block 30 comprises an L-shaped elastic flange 16, placed circularly on the ring 11. One part of the elastic flange 16 is fixed onto the upper surface of the ring 11 by means of a series of screws 17. The other part is mobile and suitable for coming into contact with a portion of the external surface of the internal ring 12. The elastic flange 16 constitutes a friction element of the braking block 30. The external surface of the internal ring 12 constitutes a second friction element of the braking block 30.

The elastic flange 16 consists of a material with a high friction coefficient, and preferably is made of bronze or hardened and tempered steel.

The internal ring 12 is preferably made of tempered steel 100Cr6, in combination or in alternative the external surface of the internal ring 12, in contact with the elastic flange 16, is preferably tempered to obtain a greater friction coefficient.

The elastic flange 16 consists of a plurality of metallic segments to form a gripping ring around the internal ring 12 to be braked.

The elastic flange 16 is pushed towards the internal ring 12 by a piston 18, made of material C40 suitable for protecting the gasket 19 from wear, made of rubber 90 Shor, controlled hydraulically by a fluid under pressure flowing in a cavity 20 through passages (not shown) placed around the cavity 20. Between the fluid and the piston 18 a gasket 19 is interposed for sealing the fluid itself.

The internal ring 12 can rotate in relation to the external ring 11 by means of the bearing 14, whose rollers (or balls) are preloaded by suitable sizing of the two parts 12a and 12b into which the internal ring 12 is subdivided. The bearing 14 is also preset to resist the supporting and operating forces of the pivot. In the event of greater loads further bearings can be used.

The hydraulically controlled brake 30, by means of a transversal force in relation to the spindle axis and an action carried out directly on the internal ring 12, in particular on its external surface, is capable of exerting a friction which can block the ring 12 and consequently the pivot. This embodiment, in which the brake 30 is completely incorporated in the external ring 11 of the thrust ring 10, not needing further braking means (such as disks, blocks, etc.), occupies a reduced space. It therefore permits the use of a single body (thrust ring), comprising the rolling elements, the elements for fixing to the machine tool and the brake, which is of a compact form and not very bulky.

A possible application of a thrust ring 10 in accordance with the present invention can be that in which it is used for the connection of a tilting head to the machine tool.

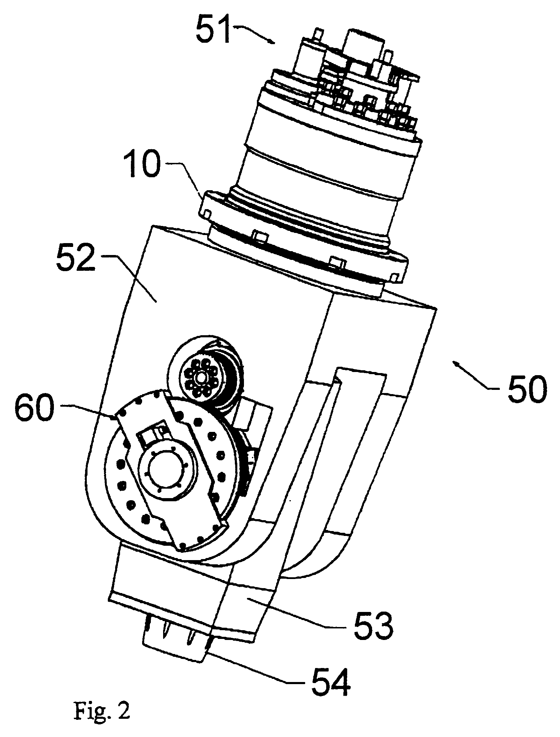

According to a preferred embodiment, a two-axis tilting head 50 is represented in Figure 2.

The tilting head 50 comprises a first thrust ring 10 according to the present invention, so that the head 50 can be connected to a machine tool (not shown) with for example three axes. A body 51 connected to the thrust ring 10 (machine side), in particular to the external ring 11, is pre-set for the electric, hydraulic and pneumatic connections between the head 50 and the machine tool. A U-shaped support 52 is connected to the thrust ring 10 (head side), in particular it is connected to the internal ring 12. The support 52 is thus free to rotate around a first axis corresponding to the axis of the thrust ring 10.

At the extremities of the U of the support 52, along a second axis perpendicular to the axis of the thrust ring 10 (first axis), a cradle 53 is pivoted which is suitably shaped to incorporate and hold an electro-spindle 54.

The cradle 53 is driven by a motor, by a possible reduction gear, by rotary motion transmission gears 60 on a third axis parallel to that of the motor, and a second thrust ring (not shown), according to the present invention, for interconnection between the cradle 53 and the support 52.

## Claims

1. Support thrust ring (10), suitable for joining a pivot to a fixed mechanical structure, comprising a fixed external ring (11) and an internal ring (12) which is mobile in relation to said external ring (11), said external ring (11) and said internal ring (12) are coupled by means of at least one bearing (14), characterized in that said thrust ring (10) comprises a braking element (30) suitable for blocking the movement between said external ring (11) and said internal ring (12).

2. Thrust ring (10) in accordance with claim 1 characterized in that said braking element (30) is situated in said external ring (11).

3. Thrust ring (10) in accordance with claim 1 characterized in that said braking element (30) comprises an elastic flange (16), fixed to said external ring (11), as first friction element.

4. Thrust ring (10) in accordance with claim 1 characterized in that said braking element (30) comprises the external surface of the internal ring (12) as second friction element.

5. Thrust ring (10) in accordance with claim 3 characterized in that said elastic flange (16) has a high friction coefficient and is in bronze or hardened and tempered steel.

6. Thrust ring (10) in accordance with claim 1 characterized in that said internal ring (12) is made of tempered steel.

7. Thrust ring (10) in accordance with claim 3 characterized in that said braking element (30) comprises a piston (18) in contact with said elastic flange (16), said piston (18) is controlled hydraulically by a fluid under pressure.

8. Thrust ring (10) in accordance with claim 7 characterized in that said braking element (30) comprises in addition a gasket (19) placed between said piston (18) and said fluid.

9. Thrust ring (10) in accordance with claim 1 characterized in that said at least one bearing (14) is a crossed roller bearing.

10. Thrust ring (10) in accordance with claim 1 characterized in that said bearing (14) includes at least two rolling surfaces, one of said rolling surfaces is fixed on said external ring (11) and one is fixed on said internal ring (12).

11. Thrust ring (10) in accordance with claim 1 characterized in that said external ring (11) comprises means (13) for fastening to said mechanical structure.

12. Thrust ring (10) in accordance with claim 1 characterized in that said external ring (11), said internal ring (12) and said braking element (30) have a cylindrical shape.

13. Head (50) suitable for being connected to a machine tool, comprising a thrust ring (10) for connection between said head (50) and said machine tool, characterized in that said thrust ring (10) includes a hydraulically controlled brake.

14. Head (50) in accordance with claim 13 characterized in that said thrust ring (10) comprises an external ring connectable to said machine tool and an internal ring (12) connected to said head (50) and that said brake is placed on said external ring (11).

15. Head (50) in accordance with claim 13 characterized in that said thrust ring (10) comprises at least one crossed roller bearing.

16. Head (50) in accordance with claim 13 characterized in that said brake comprises an elastic flange in contact with a hydraulically controlled piston, fixed to said external ring (11), as friction element against said internal ring (12).

17. Head (50) in accordance with claim 13 characterized in that said head is a tilting head.

18. Head (50) in accordance with claim 13 characterized in that said brake exerts a braking action in a perpendicular direction in relation to the axis of said head.

19. Head (50) in accordance with claim 13 characterized in that said thrust ring (60) is connected to a support (52) on which a cradle is pivoted (53) which is suitable for incorporating and holding an electro-spindle (54).
